# EUROPÄISCHE PATENTSCHRIFT

(11) **EP 3 262 393 B1**
(45) Veröffentlichungstag und Bekanntmachung des Hinweises auf die Patenterteilung: **07.11.2018**
(21) Anmeldenummer: 16711109.5
(22) Anmeldetag: 24.02.2016
(51) Int. Cl.: G01M 13/04

(54) **MESSSYSTEM ZUR VIBRATIONSMESSUNG**
MEASURING SYSTEM FOR MEASURING VIBRATION
SYSTÈME DE MESURE POUR MESURER DES VIBRATIONS

(30) Priorität: 24.02.2015 AT 1012015
(43) Veröffentlichungstag der Anmeldung: 03.01.2018
(73) Patentinhaber: Radicos Technologies GmbH, 1070 Wien (AT)
(72) Erfinder: VOCKENHUBER, Peter, 3960 Sierre (CH)
(74) Vertreter: Keschmann, Marc
(86) Internationale Anmeldenummer: PCT/AT2016/000015
(87) Internationale Veröffentlichungsnummer: WO 2016/134391

(56) Entgegenhaltungen:
- WO-A1-97/02478
- WO-A1-97/17599
- DE-A1- 19 902 490
- US-A1- 2013 211 737

## Beschreibung

Die Erfindung betrifft ein Verfahren zur Vibrationsmessung an einer Vielzahl von räumlich beabstandeten Messstellen, wobei jeder Messstelle zumindest ein Beschleunigungssensor zugeordnet wird.

Die Erfindung betrifft weiters ein Messsystem zur Vibrationsmessung an einer Vielzahl von räumlich beabstandeten Messstellen, umfassend eine Mehrzahl von Beschleunigungssensoren, wobei jeder Messstelle zumindest ein Beschleunigungssensor zuordenbar ist.

Die Erfindung betrifft weiters ein Förderband sowie eine Absperrung mit einem Messsystem der oben genannten Art.

Vibrationsmessungen, insbesondere die Messung unerwünschter Vibrationen sind in verschiedenen Anwendungsfällen von Bedeutung. Im Rahmen der vorliegenden Erfindung können Vibrationsmessungen beispielsweise bei aktiven oder passiven Anlagen vorgenommen werden. Die Messstellen sind somit Bauteile aktiver oder passiver Anlagen. Im Rahmen der Erfindung wird unter einer aktiven Anlage eine Konstruktion verstanden, die im Betriebszustand eine Bewegung bereitstellt, bspw. eine Fertigungsmaschine, ein Förderband oder eine Rolltreppe. Es handelt sich somit um Anlagen, bei denen die erfindungsgemäß zu erfassenden Vibrationen aus dem Betrieb der Anlage selbst herrühren. Unter einer passiven Anlage wird hingegen eine Konstruktion verstanden, bei denen die zu erfassenden Vibrationen durch Einwirkungen von außen hervorgerufen werden, bspw. Hindernisse oder Absperrungen.

Auch andere unerwünschte Intrusionen können detektiert werden, zum Beispiel das Anbohren von Rohrleitungen (pipe lines).

Im Falle der Überwachung von Bauteilen aktiver Anlagen betrifft die Erfindung insbesondere ein Verfahren und ein Messsystem zur Überwachung einer Mehrzahl von Wälzlagern, insbesondere Wälzlager von rotierenden Bauteilen eines Förderbandes, wobei jedem Wälzlager zumindest ein Beschleunigungssensor zugeordnet wird. Lager, insbesondere Wälzlager sind ein wesentlicher Bestandteil von aktiven Anlagen, bspw. von Förderbändern und Rolltreppen. Bei Förderbändern werden die rotierenden Teile, insbesondere die Trag- und Führungsrollen des Fördergurtes durch Wälzlager drehbar gehalten. Ein Ausfall eines oder mehrerer Lager beeinträchtigt die Funktionsweise des Förderbandes und kann im schlimmsten Fall zu einem Betriebsstillstand führen. Es ist daher notwendig, solche Lager zu überwachen, um Verschleißerscheinungen und entstehende Defekte bereits frühzeitig erkennen und die erforderlichen Wartungs- oder Austauscharbeiten rechtzeitig durchführen zu können, und zwar bevor eine ernsthafte Funktionsbeeinträchtigung oder ein Betriebsausfall auftritt. Hierbei ist es wesentlich, dass die Lagerüberwachung mindestens genauso zuverlässig ist wie die Lager selbst.

Passive Anlagen wie bspw. ein Zaun, umfassen mehrere Überwachungssektoren, um ein Ereignis wie einen Einbruch zu detektieren und lokalisieren zu können. Hierbei ist vorgesehen, dass jedem Überwachungssektor ein Beschleunigungssensor zugeordnet ist, welcher verdächtige Vibrationen erkennt. Diese können durch einen Überwindungsversuch durch eine Person oder durch eine Säge ausgelöst werden. Der Beschleunigungssensor erkennt diese Vibrationen und meldet diesen Vorfall, sodass rasch reagiert werden kann, z.B. durch eine Überprüfung eines beauftragten Wachdienstes.

Allgemein kann die Erfindung bei allen Situationen zum Einsatz kommen, bei welchen Vibrationen mithilfe von Beschleunigungssensoren erkannt, erfasst und analysiert werden sollen.

Eine Lagerüberwachung gemäß dem Stand der Technik ist beispielsweise in der EP 0859948 B1 beschrieben. An die einzelnen Lager wird hierbei jeweils eine Datensammel- und -übertragungseinheit angebaut, die mit mehreren Sensoren, bspw. Temperatursensoren, Beschleunigungssensoren und Drehzahlsensoren ausgestattet sind. Die Übertragungseinheiten sind einzeln über eine Kabelverbindung an ein Kabelstrangsystem angebunden, das als Datenübertragungsbus zum Austausch von Daten zwischen den lokalen Datensammel- und -übertragungseinheiten und einem zentralen Rechner ausgebildet ist. Der zentrale Rechner wertet die von den lokalen Einheiten empfangenen Daten aus und erkennt defekte Lager. Die Überwachungsvorrichtung gemäß der EP 0859948 B1 weist mehrere Nachteile auf. Ein Teil der Sensoren ist baulich in das Lager integriert, sodass eine nachträgliche Ausrüstung einer Maschine mit einer solchen Überwachungsvorrichtung nur schwer zu realisieren ist. Weiters ist der Verkabelungsaufwand groß, weil die lokalen Einheiten mit Verbindungskabeln alle einzeln an den Telekommunikationsbus angeschlossen werden müssen. Durch die vielen Kabelverbindungen ergibt sich eine Vielzahl von elektrischen Verbindungsstellen, bspw. am Anschluss des Verbindungskabels einerseits an die lokale Einheit und andererseits an die T-Konnektoren des Kommunikationsbusses sowie am Anschluss der zwischen den T-Konnektoren verlaufenden Bus-Abschnitte an die T-Konnektoren. Dadurch werden zusätzliche Störungsquellen erzeugt, die sich negativ auf die Störanfälligkeit der Überwachung auswirken. Aus dem Stand der Technik sind weiters auf Funkübertragung basierende Lagerüberwachungssysteme bekannt, die eine Reihe von Nachteile aufweisen. So sind sie relativ störanfällig, weil Funkwellen im industriellen Umfeld vielen Störfaktoren ausgesetzt sind, die die Übertragung negativ beeinflussen können. Störfaktoren sind bspw. die Interferenz mehrerer Funkwellen, eine wasserdampfgesättigte Atmosphäre, oder Interferenzen durch Reflexionen der Trägerfrequenz (multiple path interference). Weiters haben solche Systeme oftmals den Nachteil, dass sie über Batterien mit Strom versorgt werden müssen. Dadurch ist ein regelmäßiger Batterieaustausch nötig, der Kosten verursacht und aufgrund von defekten Batterien Ausfälle der Lagerüberwachung zur Folge haben kann. Weiters sind Batterien gemäß dem Stand der Technik nur mit eingeschränktem Arbeitstemperaturbereich verfügbar und somit nicht für alle Anwendungen Die Dokumente WO 97/02478 A, US2013/211737 und WO 97/17599 offenbaren Verfahren zur Vibrationsmessung.

Es ist daher eine Aufgabe der Erfindung, ein Verfahren bereitzustellen, das zumindest einen der oben genannten Nachteile überwindet. Insbesondere ist es eine Aufgabe der Erfindung, ein zuverlässiges und einfaches Verfahren und System zur Überwachung einer Mehrzahl von Messstellen bereitzustellen.

Der Erfindung liegt die Aufgabe zugrunde, ein Verfahren nach Anspruch 1, ein Messsystem nach Anspruch 8, eine Förderband nach Anspruch 17 und eine Absperreinrichtung nach Anspruch 21 bereitzustellen.

Die Beschleunigungssensoren werden also in ein Sensorkabel integriert, welches so angeordnet wird, dass die Beschleunigungssensoren jeweils zumindest einer Messstelle, wie z.B. einem Lager einer aktiven Anlage oder einem Überwachungssektor einer passiven Anlage, zugeordnet sind. Bevorzugt wird jede Messstelle von einem einzelnen Beschleunigungssensor überwacht. Die von den Beschleunigungssensoren ermittelten Werte werden an einen Kabelkopfrechner gesendet, welcher anschließend die einzelnen Messwerte auswertet, um eventuelle Auffälligkeiten, z.B. im Hinblick auf den Ausfall oder bevorstehenden Ausfall von Lagern, zu erkennen und entsprechend auszugeben. Basierend auf dieser Ausgabe kann durch das Bedienpersonal reagiert werden, bspw. durch den Austausch eines oder mehrerer auffälliger Lager. Hinsichtlich der konstruktiven Details der Ausbildung des mit integrierten Beschleunigungssensoren versehenen Sensorkabels wird auf die Ausführungen weiter unten zum erfindungsgemäßen Messsystem verwiesen.

Es hat sich herausgestellt, dass die Beschleunigung bzw. die Vibration eines Lagers ein besonders geeigneter Indikator für den Zustand eines Lagers ist. Es ist auch möglich, andere Sensoren, bspw. Temperatursensoren zusätzlich zu den Beschleunigungssensoren in das Sensorkabel zu integrieren, um einen zusätzlichen Indikator bereitzustellen. Grundsätzlich gilt, dass ein stark vibrierendes Lager auf einen (baldigen) Ausfall hindeutet. Eine bevorzugte Ausbildung sieht daher vor, dass die Auswertung der Messergebnisse den Vergleich der gemessenen Beschleunigungswerte, insbesondere eines Amplitudenwertes, mit einem Schwellenwert umfasst. Hierbei können fix voreingestellte Schwellenwerte benutzt werden, oder auch individuell errechnete, bspw. basierend auf einer Mittelwertbildung der Messwerte. Die Auswertung der gemessenen Beschleunigungswerte erfolgt hierbei so, dass das Überschreiten des Schwellenwerts registriert und der weiteren Auswertung zugrunde gelegt wird.

Die statistische Auswertung der Schwellwertüberschreitungen kann einen zuverlässigen Hinweis auf den bevorstehenden Ausfall eines Lagers liefern.

Eine besonders einfache Art der Auswertung sieht beispielsweise vor, dass bereits ein einmaliges Überschreiten des Schwellenwerts die Ausgabe eines Warnsignals veranlasst. Um allfällige Fehlsignale oder Störeinflüsse ausblenden zu können, ist aber besonders bevorzugt vorgesehen, dass die Auswertung der Messergebnisse das Zählen von Überschreitungen eines Schwellenwertes durch die gemessenen Beschleunigungswerte, insbesondere einen Amplitudenwert, umfasst. Dieses Verfahren ist besonders gut geeignet, um dem Auftreten von einmaligen, nicht relevanten Messwertausreißern wirksam zu begegnen und Fehlalarme zu vermeiden. Erst wenn ein Schwellenwert mehrmals überschritten wird, wird eine Auffälligkeit festgestellt und ein Warnsignal ausgegeben. Einmalig hohe Messwerte hingegen werden nicht berücksichtigt. Auf diese Art und Weise ist ohne weiteres auch eine Trenderkennung möglich. Beispielsweise gelingt dies durch die Auswertung der Häufigkeit des Überschreitens des Schwellenwerts. Das Ansteigen der Häufigkeit von Schwellenwertüberschreitungen zeigt hierbei einen Trend im Hinblick auf einen sich verschlechternden Zustand des Lagers an. Ein Warnsignal wird bevorzugt dann ausgegeben, wenn die Häufigkeit, d.h. die Anzahl der Schwellenwertüberschreitungen je Zeiteinheit, einen vorgegebenen Wert überschreitet.

Aber auch die Periodizität des Auftretens von Beschleunigungswertspitzen kann als Hinweis auf einen Lagerschaden herangezogen werden. Wenn das zeitliche Auftreten von Beschleunigungswertspitzen beispielsweise mit der Umdrehungsgeschwindigkeit korreliert, also z.B. einmal je Umdrehung auftritt, kann dies als Hinweis auf eine defekte Kugel eines Kugellagers interpretiert werden. Eine bevorzugte Ausbildung sieht in diesem Zusammenhang vor, dass die Auswertung das Erfassen der zeitlichen Abstände zwischen Schwellenwertüberschreitungen umfasst.

Die Auswertung kann so vorgenommen werden, dass die bei jeder Messstelle erhaltenen Messergebnisse der Beschleunigungssensoren gesondert ausgewertet werden. Alternativ kann aber auch vorgesehen sein, dass die an einer Mehrzahl von Messstellen ermittelten Messergebnisse gemeinsam ausgewertet werden. Dabei kann beispielsweise so vorgegangen werden, dass bei der Auswertung der an einer Messstelle gewonnenen Messergebnisse die Messergebnisse von wenigstens einer anderen Messstelle berücksichtigt werden.

Bevorzugt werden die Messergebnisse einer Gruppe von örtlich benachbarten Messstellen gemeinsam ausgewertet. Dies kann dazu ausgenutzt werden, um Umgebungseinflüsse bei der Auswertung der Messergebnisse zu berücksichtigen. Schwellenwertüberschreitungen, die bei einer Mehrzahl von benachbarten Messstellen gleichzeitig auftreten und die beispielsweise durch die Vibrationen eines vorbeifahrenden Fahrzeuges oder dgl. verursacht werden, können dadurch ausgeblendet werden. Weiters kann eine im Wesentlich gleichartige Veränderung der Beschleunigungsmesswerte, die bei einer Gruppe von benachbarten Messstellen erfasst wird, auf Vibrationen eines die betroffenen Messstellen, insbesondere Lager, stützenden Traggerüsts zurückgeführt werden statt auf einen Verschleiß bei den Lagern.

Gemeinsames Merkmal aller erfindungsgemäßen Auswertemethoden ist daher die Erfassung einer Mehrzahl von Sensorwerten und deren zentrale Auswertung in einem Rechner, dem die Gesamtheit aller Sensorwerte vorliegt.

Erfindungsgemäß erfolgt die Auswertung der Messergebnisse im Kabelkopfrechner, d.h. in einer zentralen Einheit. Eine ergänzende Auswertung kann auch lokal, d.h. in den einzelnen Knoteneinheiten vorgesehen sein. Die lokale Auswertung kann verschiedene statistische Auswertungen umfassen, wie z.B. eine Mittelwert- oder Medianwertbildung, eine Aufsummierung oder eine Messwertanalyse, wie z.B. die Ermittlung der Amplitude und/oder der Frequenz und/oder einer Hüllkurve der erfassten Vibrationsschwingungen. Die Ergebnisse der lokalen Auswertung werden als "Messergebnis" an den Kabelkopfrechner übermittelt.

Um die lokale Auswertung der Messergebnisse zu ermöglichen, ist bevorzugt vorgesehen, dass die Messergebnisse in einem in der Knoteneinheit angeordneten Zwischenspeicher zwischengespeichert werden. Dem Zwischenspeicher werden die kontinuierlich oder in periodischen Abständen erfassten Messergebnisse zugeführt, wobei ein zugeordnete Auswerteschaltung eine lokale Auswertung der zwischengespeicherten Messergebnisse vornimmt. Sobald die Knoteneinheit adressiert wird, kann das Ergebnis der lokalen Auswertung dann an den Kabelkopfrechner übermittelt werden, wodurch die zu übermittelnde Datenmenge wesentlich geringer ist als wenn alle zwischengespeicherten Messergebnisse zu übermitteln wären. Nach der Übermittlung wird der Zwischenspeicher bevorzugt zurückgesetzt, sodass dieser während des Zeitraums bis zur nächsten Adressierung wieder mit den kontinuierlich oder in periodischen Zeitabständen erfassten Messergebnissen gefüllt und die beschriebene Art der lokalen Auswertung vorgenommen wird.

In den einzelnen Knoteneinheiten kann auch eine vorgelagerte Messwertverarbeitung dahingehend erfolgen, dass der Betrag des Summenvektors der in drei orthogonalen Raumrichtungen gemessenen Beschleunigungswerte errechnet und als Beschleunigungsmesswert der weiteren Auswertung zugeführt wird. Dieser Wert gibt somit richtungsunabhängig die Beschleunigung wieder. Dadurch wird der Einsatz des Sensorkabels flexibler und einfacher, weil die Beschleunigungssensoren nicht in einer bestimmten Ausrichtung angeordnet sein müssen. Alternativ können die in drei orthogonalen Raumrichtungen gemessenen Beschleunigungswerte auch gesondert voneinander weiterverarbeitet und ausgewertet werden. Dies ist insbesondere dann vorteilhaft, wenn einer bestimmten Beschleunigungsrichtung im Rahmen der Auswertung eine besondere Bedeutung zukommt.

Falls Sensoren verwendet werden, die keine Richtungsabhängigkeit aufweisen, ist es nicht erforderlich, diese Datenvorverarbeitung durchzuführen. Ein geeigneter, richtungsunabhängiger Sensor ist bspw. der SQ-MIN-200 der Fa. SignalQuest.

Bevorzugt ist vorgesehen, dass der zumindest eine Kabelkopfrechner eine Anfrage an zumindest eine Knoteneinheit sendet, um die Übermittlung eines Messergebnisses auszulösen. Die Knoteneinheiten sind somit einzeln adressierbar, wobei bevorzugt vorgesehen ist, dass die Knoteneinheiten in ihrer Reihenfolge entlang des Sensorkabels nacheinander adressiert werden. Insbesondere können die Knoteneinheiten zyklisch adressiert werden, wobei nach einem Durchlauf aller Knoteneinheiten wieder bei der ersten Knoteneinheit begonnen wird. Der Zeitabstand zwischen den einzelnen Zyklen kann hierbei frei gewählt werden, wobei die Genauigkeit der Messwertauswertung hinsichtlich einer Trenderkennung umso höher ist, je kürzer der zeitliche Abstand zwischen den Zyklen gewählt ist.

Bevorzugt wird den einzelnen Knoteneinheiten jeweils eine eindeutige Kennung zugeordnet, sodass die von ein und derselben Knoteneinheit erhaltenen Messergebnisse im Kabelkopfrechner einander zugeordnet und einer gemeinsamen Auswertung zugeführt werden können.

Im Rahmen der Überwachung ist bevorzugt, dass der zumindest eine Kabelkopfrechner nach der Auswertung der Messergebnisse ein auf den Messergebnissen basierendes Statussignal, bspw. gegebenenfalls ein akustisches oder visuelles Alarmsignal, ausgibt. Insbesondere kann der Kabelkopfrechner elektronische Mittel zur Erzeugung einer graphischen Benutzeroberfläche aufweisen oder mit solchen Mitteln verbunden sein, um die Status- und ggf. Warnsignale auf einer Anzeigeeinheit, wie z.B. einem Bildschirm anzuzeigen. Zusätzlich kann vorgesehen sein, dass der Kabelkopfrechner mit den Knoteneinheiten zusammenwirkt, um Status- und/oder Warnsignale an die betroffene Knoteneinheit zu übermitteln, sodass ein entsprechendes visuelles oder akustisches Signal an der Knoteneinheit ausgegeben wird. Besonders einfach können Statussignale in der Knoteneinheit über LEDs ausgegeben werden, bspw. eine grüne LED leuchtet, wenn keine Instandhaltungs- oder Instandsetzungsmaßnahmen erforderlich sind, und eine rote LED leuchtet, wenn ein Lager zu inspizieren und ggf. auszuwechseln ist.

Um Messwerte von verschiedenen Beschleunigungssensoren vergleichbar analysieren zu können, ist bevorzugt vorgesehen, dass die Beschleunigungssensoren jeweils im im Wesentlichen gleichen Abstand zu den entsprechenden Lagern angeordnet werden. Dadurch sind die Messwerte im Normalzustand im Wesentlichen gleich.

Gemäß einem weiteren Aspekt betrifft die Erfindung ein Messsystem zur Überwachung einer Mehrzahl von räumlich beabstandeten Messstellen der eingangs genannten Art, wobei die Beschleunigungssensoren in adressierbaren Knoteneinheiten eines Sensorkabels angeordnet sind und das Sensorkabel mit zumindest einem Kabelkopfrechner verbindbar ist. Das Messsystem ist insbesondere für die Durchführung des erfindungsgemäßen Verfahrens geeignet.

Bevorzugt umfasst das Messsystem weiters einen Kabelkopfrechner, der ausgebildet ist, um Messergebnisse von den Knoteneinheiten zu erhalten und die Messergebnisse auszuwerten.

Bevorzugt ist vorgesehen, dass zumindest eine adressierbare Knoteneinheit einen Zwischenspeicher umfasst, um Messergebnisse speichern zu können. Der Zwischenspeicher kann entweder als analoges Element (z.B. als Kondensator) oder als digitales Element (etwa als Zähler) ausgeführt sein.

Dabei weist der Zwischenspeicher bevorzugt einen Rücksetz - Eingang auf, um den Zwischenspeicher zurückzusetzen. Das Rücksetzen des Zwischenspeichers bewirkt dabei insbesondere ein Löschen der darin gespeicherten Messergebnisse, worauf der Zwischenspeicher erneut gefüllt werden kann. Das Rücksetzen des Zwischenspeichers kann bevorzugt jedes Mal erfolgen, nachdem die Knoteneinheit adressiert wurde und die zwischengespeicherten Messergebnisse oder das Ergebnis einer auf den zwischengespeicherten Messergebnissen basierenden lokalen Auswertung an den Kabelkopfrechner übermittelt wurde.

Die zwischengespeicherten Messergebnisse können auch in einen weiteren lokalen Speicher übernommen werden, der sich in der Knoteneinheit befindet, und in dem daher eine Zeitreihe von Messergebnissen aus dem Zwischenspeicher verfügbar ist. Aus dieser Zeitreihe kann dann auf den Zustand des betreffenden Lagers geschlossen werden. Dies ist insbesondere dann von Vorteil, wenn die Abtastkadenz sehr hoch ist im Vergleich beispielsweise zur Umdrehungszahl der zu überwachenden Lager.

In einer bevorzugten Ausbildung ist vorgesehen, dass der zumindest eine Kabelkopfrechner ausgebildet ist, um ein Statussignal, basierend auf den empfangenen Messergebnissen, auszugeben. Hierbei wird also vom Kabelkopfrechner ein auf den Messwerten der einzelnen Beschleunigungssensoren basierendes Statussignal angezeigt, welches bspw. im Falle der Überwachung von Lagern einen normalen Betriebszustand der Lager anzeigt oder aber eine Störung bzw. eine sich anbahnende Störung eines oder mehrerer Lager. Auf Basis eines solchen Signals kann durch das Bedienpersonal entsprechend reagiert werden.

Um zu verhindern, dass die von einer Maschine wie einem Förderband oder anderen Umweltfaktoren ausgehenden Emissionen, bspw. Vibrationen, den Kabelkopfrechner stören oder beeinträchtigen, ist bevorzugt vorgesehen, dass der zumindest eine Kabelkopfrechner von den Messstellen räumlich getrennt angeordnet ist. Insbesondere ist es bevorzugt, dass der Kabelkopfrechner in einem von den Messstellen gesonderten Raum angeordnet ist.

Besonders bevorzugt ist vorgesehen, dass das Sensorkabel lösbar an einem Gerüst eines Förderbandes angeordnet ist. Dadurch ist es möglich, das Sensorkabel auf einfache Art und Weise in eine bereits bestehende Maschine zu installieren. Geeignete lösbare Befestigungsmittel sind bspw. Schraubverbindungen oder Magnetverbindungen.

So kann auch erreicht werden, dass einer Gruppe von Lagern, die beispielsweise an einem Schott angebracht sind, ein einziger Sensor zugeordnet ist, der alle an diesem Schott angebrachten Lager gemeinsam überwacht.

Das Sensorkabel ist bevorzugt so ausgebildet, dass es wenigstens zwei elektrische Leiter aufweist, welche die entlang des Sensorkabels angeordneten Knoteneinheiten miteinander verbinden. Insbesondere ist die Knoteneinheit seriell in wenigstens einen der wenigstens zwei elektrischen Leiter eingefügt. Dies bedeutet, dass der wenigstens eine elektrische Leiter durch die Knoteneinheit unterbrochen ist, wobei die durch die Unterbrechung erzeugten zwei freien Enden des Leiters an die Knoteneinheit angeschlossen sind. Der elektrische Anschluss kann hierbei entweder lösbar ausgebildet sein, z.B. mittels einer Steckverbindung, oder unlösbar, z.B. mittels einer Lötverbindung oder Schneidklemm - Verbindung (crimpen), sodass diese Verbindungen nicht zerstörungsfrei getrennt werden können.

Das Sensorkabel mit den integrierten Knoteneinheiten kann somit bevorzugt eine daisy chain ausbilden, bei der jede Knoteneinheit jeweils nur mit den vorangehenden Knoteneinheiten verbunden ist. Das Signal zu und von einer Knoteneinheit geht über seine Vorgänger bis zum Kabelkopfrechner hin.

Das Sensorkabel bildet zwischen zwei benachbarten Knoteneinheiten jeweils einen Verbindungsabschnitt aus. Die Verbindungsabschnitte können dabei untereinander die gleiche Länge aufweisen, sodass die Knoteneinheiten in regelmäßigen Abständen angeordnet sind. Erfindungsgemäß weist das Sensorkabel eine Ummantelung auf, die sich sowohl über die Verbindungsabschnitte als auch über die Knoteneinheiten erstreckt. Die Ummantelung ist bevorzugt durch Extrudieren auf das Kabel aufgebracht, wodurch sich eine durchgehend einheitliche Oberfläche ergibt und die Knoteneinheiten samt den Beschleunigungssensoren vollständig geschützt im Inneren der durchgehenden Ummantelung angeordnet sind.

Da das Extrudieren der Ummantelung im Bereich der Knoteneinheiten zu einer nicht unwesentlichen thermischen Belastung führt, sieht die Erfindung vor, dass das Sensorkabel eine Ummantelung aufweist, die sich über die Verbindungsabschnitte erstreckt und im Bereich der Knoteneinheiten unterbrochen ist. Im Bereich der Unterbrechung ist in diesem Fall eine gesonderte Verkapselung der Knoteneinheiten vorgesehen. Die Erfindung sieht in diesem Zusammenhang vor, dass der Bereich, in welchem die Ummantelung unterbrochen ist, von einem die jeweilige Knoteneinheit umgebenden Gehäuse überbrückt ist. Das Gehäuse kann dabei von einem durch Umgießen der Knoteneinheit entstandenen Gusskörper gebildet sein, wobei mit Vorteil auch die der Knoteneinheit zugewandten Enden der Verbindungsabschnitte des Sensorkabels umgossen werden, wodurch das Gehäuse mit der Ummantelung des Kabels verbunden wird.

Alternativ kann die Ausbildung so getroffen sein, dass das Gehäuse die Knoteneinheit rohrförmig umschließt und an beiden Enden staub- und wasserdicht an der angrenzenden Ummantelung befestigt ist. Die Befestigung ist vorzugsweise durch eine Crimpverbindung hergestellt, sodass eine kostengünstige und einfache Herstellung ermöglicht wird.

In einer weiteren, bevorzugten Ausführungsform sind die elektrischen Leiter bzw. Adern des Sensorkabels verdrillt ausgeführt, was im elektromagnetisch gestörten Umfeld vorteilhaft ist. Alternativ oder zusätzlich kann die Ummantelung des Sensorkabels zur Schirmung eine abschirmende Schicht aufweisen.

Bei einer Ausbildung, bei welcher die Ummantelung des Sensorkabels im Bereich der Knoteneinheiten unterbrochen ist, ist bevorzugt vorgesehen, dass das Gehäuse aus elektrisch leitendem Material, zum Beispiel Metall, vorzugsweise Aluminium ausgebildet und elektrisch leitend mit dem Schirm, d.h. der abschirmenden Schicht, des Sensorkabels verbunden ist. Dadurch wird erreicht, dass das Gehäuse den Schirm der beiden angrenzenden Verbindungsabschnitte des Sensorkabels verbindet. Besonders vorteilhaft ist hier, dass der Einfluss von externen elektromagnetischen Störungen durch die Kombination von Schirm und Gehäuse von der Knotenelektronik, die sich unter dem Gehäuse befindet, ferngehalten wird.

Hinsichtlich der Verkapselung der Knoteneinheiten muss darauf geachtet werden, dass die Vibrationen des Lagers möglichst unverfälscht und ungedämpft auf den Beschleunigungssensor übertragen werden. Erfindungsgemäß der Beschleunigungssensor durch das Gehäuse bzw. die Ummantelung nach außen ragt. Alternativ kann erfindungsgemäß vorgesehen sein, dass der Beschleunigungssensor mechanisch mit dem Gehäuse gekoppelt ist. Die vom Lager ausgehenden Vibrationen werden dabei zunächst in das Gehäuse eingekoppelt und dann vom Gehäuse auf den Beschleunigungssensor übertragen. Eine gute Kopplung ist hierbei sichergestellt, wenn der Beschleunigungssensor das Gehäuse innen vorzugsweise flächig kontaktiert. Eine besonders gute Kopplung ergibt sich bevorzugt, wenn das Gehäuse aus einem steifen Material, wie z.B. Metall besteht.

Eine gute Ankoppelung von Vibrationen auf das Gehäuse wird bevorzugt dadurch ermöglicht, dass das Gehäuse Befestigungsmittel, wie z.B. eine Bohrung oder ein Befestigungsauge für einen Schraubbolzen oder dgl., aufweist. Die Befestigungsmittel dienen hierbei dazu, einen flächigen Kontakt zwischen dem Gehäuse und dem zu überwachenden Bauteil, insbesondere Lager, oder einem das Lager abstützenden Bauteil herzustellen und zu halten.

Für eine gute Übertragung der an der Messstelle auftretenden Vibrationen zu den Beschleunigungssensoren ist es von Vorteil, wenn die Beschleunigungssensoren mit dem sie umgebenden Gehäuse starr verbunden sind.

Weiters ist bevorzugt vorgesehen, dass die adressierbare Knoteneinheit von außerhalb des Signalkabels, also insbesondere mithilfe von drahtlosen Kommunikationsmitteln Signale empfangen bzw. nach außerhalb senden kann. Insbesondere kann die drahtlose Kommunikation nach außen vorteilhaft durch die Modulation einer Leuchtdiode erfolgen, wobei beispielsweise am Ort eines schadhaften Lagers eine entsprechende optische Anzeige direkt erfolgen oder angesteuert werden kann. Es ist daher bevorzugt vorgesehen, dass jeder Knoteneinheit eine Leuchtdiode zugeordnet ist, die bevorzugt in oder an der jeweiligen Knoteneinheit angeordnet ist.

Gemäß einem weiteren Aspekt betrifft die Erfindung ein Förderband, umfassend mehrere Lager und ein erfindungsgemäßes Messsystem, dessen Knoteneinheiten jeweils einem Lager zugeordnet sind. Bevorzugt ist vorgesehen, dass die Knoteneinheiten jeweils im im Wesentlichen gleichen Abstand zu den entsprechenden Lagern angeordnet sind. Dadurch ist gewährleistet, dass die Beschleunigungssensoren im normalen Betriebszustand ähnliche Messwerte liefern.

Um die Übertragung der Vibrationen von den einzelnen Lagern zu den entsprechenden Beschleunigungssensoren zu verbessern, ist bevorzugt vorgesehen, dass die Lager und die jeweiligen Knoteneinheiten an einem gemeinsamen Gerüst, bevorzugt starr angeordnet sind. Dadurch können die Vibrationen des Lagers über das Gerüst an die Knoteneinheiten übertragen werden.

Bei der Anordnung der Beschleunigungssensoren ist es bevorzugt, dass die Knoteneinheiten von dem jeweiligen Lager beabstandet angeordnet sind, bevorzugt in einer Distanz von 5 bis 20cm, besonders bevorzugt in einer Distanz von 10 bis 15cm.

Gemäß einem weiteren Aspekt betrifft die Erfindung eine Absperreinrichtung, umfassend mehrere Überwachungssektoren und ein erfindungsgemäßes Messsystem, dessen Knoteneinheiten jeweils einem Überwachungssektor zugeordnet sind.

Im folgenden wird eine bevorzugte Ausbildung einer adressierbaren Knoteneinheit umfassend einen Beschleunigungssensor beschrieben, welche für den Einsatz in einem erfindungsgemäßen Messsystem geeignet ist. Dabei wird insbesondere auch auf die WO 2011/095857 A1 verwiesen.

Eine solche adressierbare Knoteneinheit weist Anschlüsse für wenigstens zwei elektrische Leiter auf, über welche die Knoteneinheit adressierbar ist, welche Anschlüsse mit einer ein Adressiersignal auswertenden Schaltung der Knoteneinheit verbunden sind, wobei die Knoteneinheit mindestens eine Stromquelle aufweist, die über mindestens eine der Leiter mit Strom versorgbar ist, und dass am Wege zwischen der auswertenden Schaltung und dem entsprechenden Leitungsanschluss ein Schalter vorgesehen ist, der nach einer Adressierung zu öffnen ist, so dass die Stromversorgung der auswertenden Schaltung nach der Adressierung durch die mindestens eine Stromquelle gesichert ist. Dadurch ist insbesondere sichergestellt, dass die auswertende Schaltung auch im Ruhezustand ausreichend mit Strom versorgt ist.

Bevorzugt ist vorgesehen, dass der auswertenden Schaltung zwei zwischen den jeweiligen Leitern und dem besagten Schalter gelegene weitere Schalter zugeordnet sind, so dass ein Signalfluss in dem Leiter in zwei Richtungen ermöglicht ist, und dass vorzugsweise jeder dieser weiteren Schalter von einer in der Gegenrichtung des Signalflusses sperrende und somit der anderen entgegen gerichtete Diodenschaltung überbrückt ist.

Weiters ist bevorzugt, dass die Stromquelle als Stromspeicher ausgebildet ist und mindestens eine Kapazität, vorzugsweise mindestens einen Kondensator, aufweist.

Bei der Knoteneinheit ist bevorzugt vorgesehen, dass der Schalter am Wege zwischen der auswertenden Schaltung und dem entsprechenden Leitungsanschluss ein Transistorschalter ist, vorzugsweise ein MOS-Transistor.

In einer bevorzugten Ausbildung der Knoteneinheit ist vorgesehen, dass sie mit zwei Signalfühlern für Signale aus zwei unterschiedlichen Richtungen ausgebildet ist, und dass vorzugsweise die auswertende Schaltung mit mindestens einem Steuerausgang zum Umschalten der Richtung von Senden und Empfang ausgebildet ist und/oder dass sie zur Abgabe von Signalen in beide Richtungen mit einem Transistor mit je einer Kollektorleitung für je eine der Richtungen versehen ist.

Eine bevorzugte Knoteneinheit weist mindestens einen, vorzugsweise zwei, Signalfühler auf, der - unabhängig von dem besagten Schalter - ständig mit den Leitungen verbunden ist.

Die Erfindung wird nachfolgend anhand eines in der Zeichnung schematisch dargestellten Ausführungsbeispiels näher erläutert. In dieser zeigen Fig. 1 eine schematische Darstellung eines erfindungsgemäßen Messsystems, Fig. 2 eine vereinfachte Darstellung einer bevorzugten Ausbildung einer adressierbaren Knoteneinheit Fig. 3 eine detaillierte Darstellung der Knoteneinheit, Fig. 4a eine bevorzugte Zwischenspeicherschaltung, Fig. 4b ein beispielhaftes Ladungsdiagramm eines Zwischenspeichers und Fig. 5 eine schematische Darstellung einer erfindungsgemäßen Absperrung.

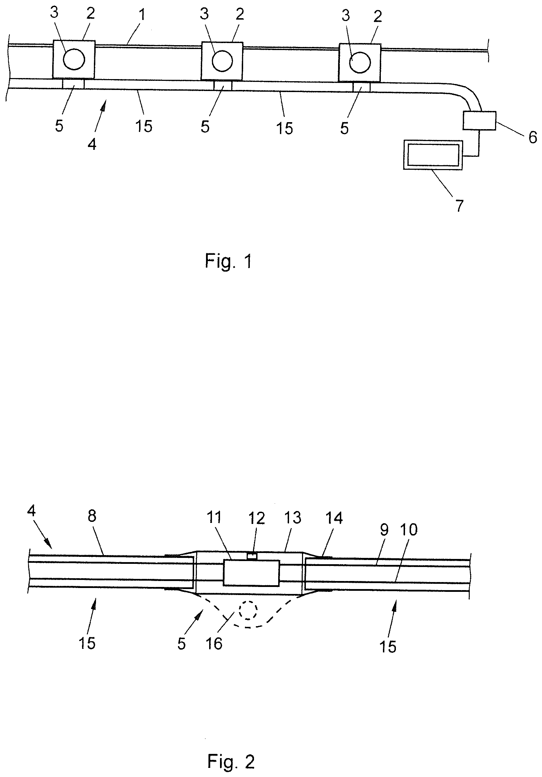

In Fig. 1 ist schematisch ein Förderband dargestellt, welches mehrere Wälzlager 2 umfasst, die jeweils eine Tragrolle 3 des Förderbandes 1 drehbar halten. Um den Zustand der Lager 2 zu überwachen, ist ein Sensorkabel 4 vorgesehen, welches einzeln adressierbare Knoteneinheiten 5 aufweist, die jeweils einen Beschleunigungssensor sowie optional weitere Sensoren umfassen. Die Knoteneinheiten 5 umfassen jeweils einen Schaltkreis, der für die Zwischenspeicherung der Messwerte der Beschleunigungssensoren, ggf. für eine Aufbereitung der Messwerte und jedenfalls für das Absenden der Messwerte verantwortlich ist, sobald die jeweilige Knoteneinheit 5 adressiert wurde. Das Sensorkabel 4 bildet einen die Knoteneinheiten miteinander verbindenden Kommunikationsbus aus und ist mit einem Kabelkopfrechner 6 verbunden, in dem die von den Knoteneinheiten 5 erfassten Beschleunigungsmesswerte empfangen, gespeichert und ausgewertet werden. Der Kabelkopfrechner 5 ist an einen Bildschirm 7 angeschlossen, um die Ergebnisse der Messwertauswertung, insbesondere Warnsignale auszugeben.

In Fig. 2 ist schematisch die Einbettung der adressierbaren Knoteneinheit 5 in das Sensorkabel 4 dargestellt. Das Sensorkabel 4 weist eine elektrische isolierende Ummantelung 8 auf, die im Bereich der Knoteneinheit 5, d.h. zwischen den Verbindungsabschnitten 15 des Sensorkabels 4 unterbrochen ist. Im Inneren der Ummantelung 8 verlaufen zwei elektrische Leiter 9 und 10, die an eine einen Schaltkreis aufweisende Platine 11 der Knoteneinheit 5 angeschlossen sind. Ein Beschleunigungssensor 12 ist an die Platine 11 bzw. den Schaltkreis angeschlossen. Die Knoteneinheit 5 ist von einem rohrförmigen Gehäuse 13 umgeben, welches in den Endbereichen 14 durch Crimpen auf die Ummantelung 8 des Sensorkabels 4 gepresst ist, um eine wasser- und staubdichte Verbindung zu erreichen. Der Beschleunigungssensor 12 ist so im Gehäuse 13 angeordnet, dass er das Gehäuse 13 kontaktiert, damit die außen auf das Gehäuse einwirkenden Vibrationen möglichst direkt und unverfälscht auf den Beschleunigungssensor 12 übertragen werden. Das Gehäuse 13 besteht beispielsweise aus Metall, insbesondere Aluminium.

In einer bevorzugten, nicht dargestellten Ausbildung sind die beiden elektrischen Leiter 9 und 10 miteinander verdrillt und von einem Schirm umgeben. Dieser Schirm ist bevorzugt mit dem Gehäuse 13 an beiden Seiten der Knoteneinheit 5 elektrisch verbunden.

Um die Knoteneinheit 5 an einem vibrierenden Teil des Förderbandes zu befestigen und eine gute Einkoppelung von Vibrationen sicherzustellen, trägt das Gehäuse 13 vorzugsweise ein Befestigungsauge 16.

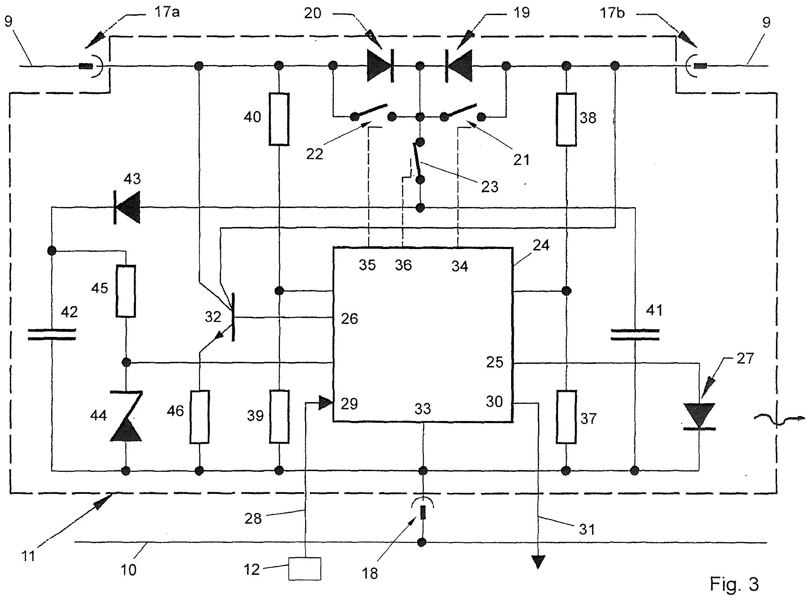

In Fig. 3 sind die schaltungstechnischen Merkmale der Knoteneinheit 5 im Detail dargestellt. Die Knoteneinheit 5 weist Anschlüsse 17a und 17b für den elektrischen Leiter 9 und einen Anschluss 18 für den elektrischen Leiter 10 auf. Die in Fig. 3 dargestellte Knoteneinheit 5 kann über die Leiter 9 und 10 an eine weitere Knoteneinheit 5 an den Kabelkopfrechner 6 angeschlossen sein.

Die Anschlüsse 17a, 17b des hier einen Bus darstellenden elektrischen Leiters 9 führen beispielsweise ein positives Signal im Verhältnis zum Signal der negativen Leitung 18. Zwischen diesen Leitern wird also das jeweilige Signal abgefühlt. Dabei erfolgt die Adressierung der Knoteneinheit 5 über eine Umschalteinrichtung 19, 20, 21, 22 und 23, welche bei geöffneten Schaltern 21, 22 und geschlossenem Schalter 23 nur ein Signal vom Kabelkopfrechner 6 über die in dieser Richtung offene Diode 20 (die Diode 19 sperrt) und über den geschlossenen Schalter 23 zur Auswerteschaltung 24. Diese gibt über den Ausgang 26 ihrer Messung entsprechende Ausgangssignale ab, worauf - vorzugsweise auf Befehl des Kabelkopfrechners 6 - die Schalter 21, 22 geschlossen werden, der Schalter 23 aber geöffnet wird, so dass das nächste Abfragesignal des Kabelkopfrechners vom Anschluss 17a über die Schalter 21, 22 zum Anschluss 17b und von dort zur nächsten anzuwählenden Knoteneinheit mit im Prinzip etwa gleicher Umschalteinrichtung 19, 20, 21, 22 und 23 gelangt, so dass eine große Anzahl solcher modulartiger Knoteneinheiten 5 hintereinander geschaltet und auf einfache Art und Weise adressiert werden können. Die Schalter 21, 22, 23 werden in der Praxis elektronische Schalter, wie Transistoren, insbesondere FET-Transistoren bzw. MOSFETs sein.

Das Umschalten der Schalter 21, 22 und 23 könnte an sich zeitgesteuert ab Erhalt eines Adressierbefehls vom Controller durch einen Taktgeber der Auswerteschaltung 24 bzw. ein in der Auswerteschaltung 24 enthaltenes Programm erfolgen, doch ist es bevorzugt, wenn die Umschaltung über den Kabelkopfrechner 6 und ein von diesem abgegebenes Signal erfolgt. Tritt ein solches Umschaltsignal auf, dann werden die Schalter 21, 22 über Steuerausgänge 34, 35 und der Schalter 23 über einen Steuerausgang 36 entsprechend angesteuert. Zum Abfühlen, ob ein solches Umschaltsignal vom jeweiligen Kabelkopfrechner 6 vorliegt, sind Spannungsteiler 37, 38 bzw. 39, 40 vorgesehen, welche die zwischen den Leitungen 9 und 10 bestehende Spannung abfühlen. Diese Spannungsteiler liegen also ständig an den durch die Dioden 19, 20 voneinander getrennten Abschnitten der Leitungen 9, so dass sie Spannungsbefehlssignale auch dann erhalten, wenn die Schalter 21, 22 geschlossen und der Schalter 23 geöffnet wird, um die Adressierung der jeweils nächsten Knoteneinheit zu ermöglichen. Durch das Vorhandensein zweier Spannungsfühler 37, 38 und 39, 40 können also die Spannungen in den Abschnitten des Leiters 9 an beiden Seiten der Knoteneinheit 5 unabhängig voneinander abgefühlt werden, und je nach dem, aus welcher Richtung ein Adressiersignal kommt, wird auch das von der Auswerteschaltung 24 aufbereitete Sensorsignal gesandt, sofern tatsächlich zwei Richtungen vorgesehen werden, beispielsweise wenn zwei Kabelkopfrechner vorgesehen sind. Die Auswerteschaltung 24 vermag also durchaus zu erkennen, von welcher Seite ein Adressier- bzw. Steuersignal ansteht und wo nicht und kann dementsprechend die aufbereiteten Sensorsignale in die entsprechende Richtung senden.

Wird der Ausgang 25 benutzt, so treibt dieser die Leuchtdiode 27, so dass durch diese in der oben beschriebenen Weise beispielsweise als Aktor ein Vorgang ausgelöst werden kann. Möglich wäre aber auch, hier einen Treiberausgang für ein Display vorzusehen, um die Messung nach außen sichtbar zu machen. Der Beschleunigungssensor 12 ist über die Eingangsleitung 28 an den Eingang 29 der Auswerteschaltung 24 angeschlossen. Das Messsignal des Beschleunigungssensors 12 tritt somit über die Eingangsleitung 28 an den Eingang 29 der Auswerteschaltung 24. Natürlich kann auch ein weiterer Signalausgang 30 mit einer Ausgangsleitung 31 verbunden sein, an welche andere, weitere lokale Einheiten angeschlossen sind, die Information aus der Knoteneinheit empfangen. Die Leuchtdiode 27, die vom Ausgang 25 angesteuert wird, kann beispielsweise im Infrarot-Bereich emittieren. Selbstverständlich sind auch andere Lichtquellen oder Aktorenschaltungen, beispielsweise mit Relais, denkbar, doch ist die Verwendung einer Diode baulich günstiger.

Über den Modulatorausgang 26 hingegen wird vorteilhaft ein dem Messwert entsprechend moduliertes Signal über einen Modulatortransistor 32 über seine zwei Kollektoren an den Bus (Anschlüsse 17a und 17b) und an den Kabelkopfrechner 6 abgegeben, der dieses Signal auf die herkömmliche Art auswertet, beispielsweise um festzustellen, ob im Bereich des Beschleunigungssensors 12 ein unzulässiger Vibrationszustand aufgetreten ist.

Entsprechend den Anschlüssen 17a, 17b ist auch die Leitung 10 vorteilhaft über eine (zerstörungsfrei) lösbare bzw. trennbare Verbindung bzw. eine Steckverbindung 18 mit der Knoteneinheit 5 verbunden.

Bei manchen Ausführungen mag es vorteilhaft sein, wenn nur die Leitungen 17a, 17b über lösbare Verbindungen, z.B. Steckverbindungen, angeschlossen werden, wogegen der Ausgang 33 unmittelbar mit der negativen Leitung 10 verbunden, beispielsweise verlötet, ist, weil dadurch etwaige Zugspannungen in Längsrichtung sich nicht auf die Positionierung der Knoteneinheit 5 auswirken. Doch lässt sich auch eine positionierungsfeste und Zugspannungen aufnehmende lösbare Verbindung verwirklichen.

Wenn nun die normalerweise offenen Schalter 21, 22 geschlossen und der, normalerweise geschlossene, Schalter 23 geöffnet ist, dann ist die Messschaltung 24 praktisch auch von der Spannung abgekoppelt, die sie für ihr weiteres Funktionieren braucht. Um dieses Problem zu lösen, ist in der Schaltung 11 mindestens eine Stromquelle bzw. ein Stromspeicher, hier in Form zweier Kondensatoren 41 und 42 vorgesehen. Alternativ könnten auch Akkumulatoren verwendet werden. Dabei ist es vorteilhaft, wenn die Umschaltung der Schalter 21, 22 und 23 nicht genau gleichzeitig erfolgt, sondern zunächst entweder die beiden Schalter 21, 22 aus dem geöffneten in den geschlossenen Zustand bei weiterhin geschlossenem Schalter 23 gebracht werden oder wenigstens erst der Schalter 21 geschlossen wird. Dadurch wird Ladung aus dem Kondensator 41 an den Leiter 9 und an die nächste Knoteneinheit abgegeben, und die Adressierung desselben kann sehr schnell erfolgen. Der Kondensator 42 bleibt von diesem "verspäteten" Öffnen des Schalters 23 deshalb unberührt, weil zwischen ihm und dem Schalter 23 eine Sperrdiode 43 liegt. Die Größe des zeitlichen Unterschieds zwischen dem Schließen der Schalter 21, 22 und dem Öffnen des Schalters 23 hängt davon ab, wie groß der Kondensator 41 ist, d.h. welche Ladung in welcher Zeit übertragen werden kann, und von dem Bedarf an Ladung der als nächstes anzuwählenden Knoteneinheit. Der Kondensator 42 in Zusammenarbeit mit der Diode 43 kann daher als "Ladungspumpe" bezeichnet werden.

Somit kann nach dem Öffnen des Schalters 23 der Reststrom aus dem Kondensator 41 mit der Ladung des maximal aufgeladenen Kondensators 42 kombiniert werden. Beide Kondensatoren 41 und 42 sind nach dem Öffnen des Schalters 23 vom rechten und linken Abschnitt des Leiters 9 praktisch isoliert und beeinträchtigen daher die Datenübertragungsrate zwischen dem Kabelkopfrechner 6 und den jeweiligen Knoteneinheiten 5 nicht.

Um die Stromquellen 41, 42 nicht zu groß machen zu müssen, ist es zweckmäßig, wenn die Schaltung auf einen "sleep"-Modus, d.h. auf eine Betriebsart mit geringerem Stromverbrauch, geschaltet werden kann. Dies kann über ein in der Auswerteschaltung 24 vorhandenes Programm oder über einen darin befindlichen Taktgeber (z.B. mit Zähler, der eine gewisse Anzahl von Takten nach dem Öffnen des Schalters 23 auf diesen "sleep"-Modus umschaltet) geschehen, wird aber bevorzugt über ein "sleep"-Signal des Controllers ausgelöst. Dieses Signal kann und wird ja auch nach dem Öffnen des Schalters 23 über die Spannungsteiler 37, 38 bzw. 39, 40 empfangen werden. In diesem "sleep"-Modus wird die Auswerteschaltung 24 über eine Zenerdiode 44 mit Widerstand 45 zwischen den beiden Seiten des Kondensators 42 mit einer relativ tieferen Spannung versorgt, wobei sich der Kondensator 42 so weit entlädt, bis er die Restspannung des Kondensators 41 erreicht hat, worauf ihm von diesem diese Restspannung als weitere Versorgungsreserve über die Sperrdiode 43 zugeführt wird. Somit steht der Auswerteschaltung bis zum nächsten Adressierzyklus genügend Energie zur Verfügung. Es sei bemerkt, dass die kapazitiven Ladungen der Kondensatoren 41 und 42 bei geöffnetem Schalter 23 von dem rechten und linken Abschnitt des Leiters 9 völlig isoliert sind und daher die Signalübermittlung nicht zu beeinflussen vermögen.

Diese Auswerteschaltung kann also auch dann Daten des Sensorelementes sammeln, wenn sie nicht adressiert ist. Um diese Daten auszuwerten, besitzt die Auswerteschaltung 24 vorzugsweise einen Zwischenspeicher, in dem die Sensordaten gespeichert werden so dass die Modulatorschaltung 46, 32 erst wieder in Betrieb geht, wenn die Knoteneinheit 5 vom Kabelkopfrechner 6 wieder angewählt wird. Dabei kann durchaus auch eine Vorbearbeitung der Daten stattfinden, etwa eine Mittelwertbildung über einen bestimmten Zeitraum (z.B. dem Zeitraum bis zur neuerlichen Adressierung), oder eine Maximal-/Minimalwert-Feststellung, so dass die Verarbeitung beim Controller rascher vor sich gehen kann.

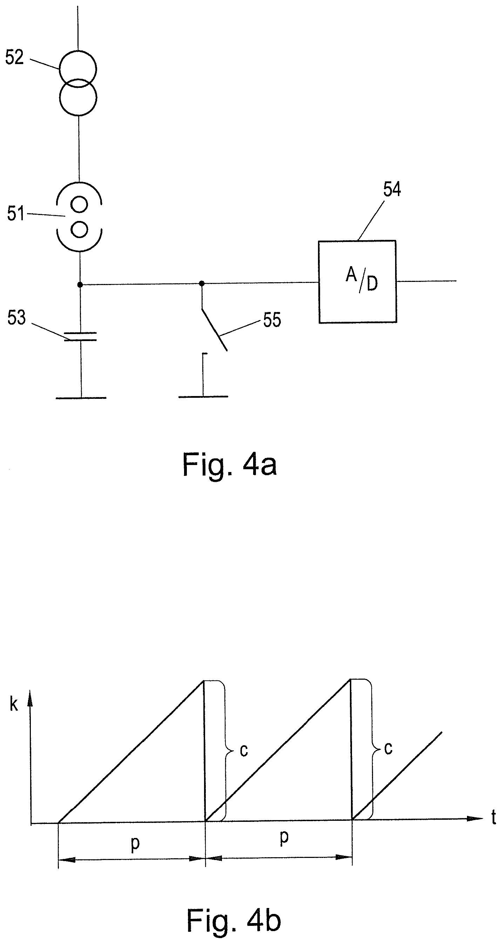

In Fig.4a ist mit 51 ein Beschleunigungssensor, bspw. ein richtungsunabhängiger Sensor SQ-MIN-200 der Fa. SignalQuest, bezeichnet. Der Sensor 51 wird über eine Stromquelle 52 mit Energie versorgt und ist mit einem Kondensator 53 verbunden, der als Zwischenspeicher dient. Der Sensor 51 verbindet bei Vibrationen die Stromquelle 52 mit dem Kondensator 53, sodass dieser aufgeladen wird. Der Kondensator 53 ist auch mit einem Analog-Digital-Konverter 54 verbunden, der die vom Kondensator 53 gespeicherten Werte in digitale Signale umwandelt und bei einer Adressierung dieser Knoteneinheit an den Kabelkopfrechner weiterleitet. Um den Kondensator 53 nach der Adressierung zurückzusetzen, d.h. zu entladen, ist ein Schalter 55 angeordnet.

In einer anderen Ausbildung kann der Zwischenspeicher auch durch ein digitales Element, z.B. einen Zähler gebildet sein.

In Fig. 4b ist die Funktionsweise eines Zwischenspeichers schematisch dargestellt. Auf der horizontalen Achse ist die Zeit t und auf der vertikalen Achse die Spannung k des Kondensators aufgetragen. Innerhalb einer Messperiode p wird der Kondensator aufgrund von durch einen Bewegungssensor gemessenen Vibrationen durch die Stromquelle 52 (Fig.4a) aufgeladen. Am Ende einer Messperiode p hat der Kondensator die Spannung erreicht, welche proportional zu den in der jeweiligen Messperiode p aufgetretenen Vibrationen ist und die Messgröße darstellt. Die Kapazität wird nunmehr am Ende der Messperiode p einerseits an den Analog-Digital-Konverter übermittelt, welcher die Daten umwandelt und weiterleitet, und andererseits mithilfe der Löschschaltung aus dem Kondensator entladen. Dadurch ist am Beginn der nächsten Messperiode p die Kapazität des Kondensators wieder auf den Anfangswert zurückgesetzt.

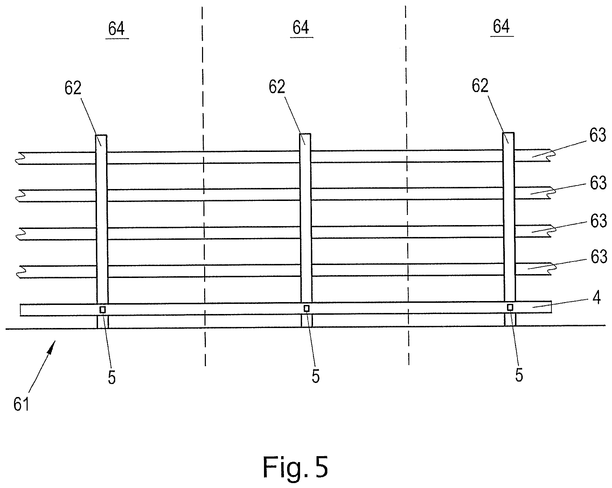

In Fig. 5 ist schematisch eine als Zaun 61 ausgebildete Absperrung dargestellt, umfassend vertikale Elemente 62 und horizontale Elemente 63. Im unteren Bereich ist ein Sensorkabel 4 mit Knoteneinheiten 5 an den vertikalen Elementen 62 angeordnet. Die Knoteneinheiten 5 umfassen Beschleunigungssensoren sowie optional weitere Sensoren, bspw. Mikrophone. Jede Knoteneinheit 5 ist einem Überwachungssektor 64 zugeordnet, sodass ein auffälliges Signal einer Knoteneinheit 5 einem Überwachungssektor 64 zugeordnet werden kann. Wird nun durch eine unbefugte Person versucht, den Zaun 61 zu überwinden, so entstehen dadurch Vibrationen, die von den in den Knoteneinheiten 5 angeordneten Beschleunigungssensoren detektiert werden.

## Patentansprüche

1. Verfahren zur Vibrationsmessung an einer Vielzahl von räumlich beabstandeten Messstellen (2), wie z.B. Lagern eines Förderbandes, wobei jeder Messstelle zumindest ein Beschleunigungssensor zugeordnet wird, wobei die Beschleunigungssensoren in adressierbaren Knoteneinheiten (5) eines Sensorkabels (4) angeordnet sind und das Sensorkabel mit zumindest einem Kabelkopfrechner verbunden wird, wobei die Knoteneinheiten Messergebnisse an den zumindest einen Kabelkopfrechner senden und anschließend der zumindest eine Kabelkopfrechner die Messergebnisse der Beschleunigungssensoren auswertet, **dadurch gekennzeichnet, dass** das Sensorkabel zwischen zwei benachbarten Knoteneinheiten jeweils einen Verbindungsabschnitt (15) ausbildet, und das Sensorkabel eine Ummantelung (8) aufweist,
die sich über die Verbindungsabschnitte erstreckt und im Bereich der Knoteneinheiten unterbrochen ist, und der Bereich, in welchem die Ummantelung unterbrochen ist, von einem die jeweilige Knoteneinheit umgebenden Gehäuse (13) überbrückt ist, wobei der Beschleunigungssensor mechanisch unmittelbar mit dem Gehäuse gekoppelt ist oder der Beschleunigungssensor durch das Gehäuse ragt.

2. Verfahren nach Anspruch 1, **dadurch gekennzeichnet, dass** der zumindest eine Kabelkopfrechner eine Anfrage an zumindest einen Beschleunigungssensor sendet, um die Übermittlung eines Messergebnisses auszulösen.

3. Verfahren nach Anspruch 1 oder 2, **dadurch gekennzeichnet, dass** die Auswertung der Messergebnisse den Vergleich der gemessenen Beschleunigungswerte, insbesondere eines Amplitudenwertes, mit einem Schwellenwert umfasst.

4. Verfahren nach Anspruch 1, 2 oder 3, **dadurch gekennzeichnet, dass** die Auswertung der Messergebnisse das Zählen von Überschreitungen eines Schwellenwertes durch die gemessenen Beschleunigungswerte, insbesondere einen Amplitudenwert, umfasst.

5. Verfahren nach einem der Ansprüche 1 bis 4, **dadurch gekennzeichnet, dass** die Messergebnisse in einem in der Knoteneinheit angeordneten Zwischenspeicher gespeichert werden.

6. Verfahren nach einem der Ansprüche 1 bis 5, **dadurch gekennzeichnet, dass** der zumindest eine Kabelkopfrechner nach der Auswertung der Messergebnisse ein auf den Messergebnissen basierendes Statussignal, bspw. gegebenenfalls ein Alarmsignal, ausgibt.

7. Verfahren nach einem der Ansprüche 1 bis 6, **dadurch gekennzeichnet, dass** die Beschleunigungssensoren jeweils im im Wesentlichen gleichen Abstand zu den entsprechenden Lagern angeordnet werden.

8. Messsystem zur Vibrationsmessung an einer Vielzahl von räumlich beabstandeten Messstellen, umfassend eine Mehrzahl von Beschleunigungssensoren, wobei jeder Messstelle zumindest ein Beschleunigungssensor zuordenbar ist, wobei die Beschleunigungssensoren in adressierbaren Knoteneinheiten eines Sensorkabels angeordnet sind, welches mit zumindest einem Kabelkopfrechner verbindbar ist, **dadurch gekennzeichnet, dass** das Sensorkabel zwischen zwei benachbarten Knoteneinheiten jeweils einen Verbindungsabschnitt ausbildet, und das Sensorkabel eine Ummantelung aufweist, die sich über die Verbindungsabschnitte erstreckt und im Bereich der Knoteneinheiten unterbrochen ist, und der Bereich, in welchem die Ummantelung unterbrochen ist, von einem die jeweilige Knoteneinheit umgebenden Gehäuse überbrückt ist, wobei der Beschleunigungssensor mechanisch unmittelbar mit dem Gehäuse gekoppelt ist oder der Beschleunigungssensor durch das Gehäuse ragt.

9. Messsystem nach Anspruch 8, **dadurch gekennzeichnet, dass** das Messsystem weiters einen Kabelkopfrechner umfasst, der ausgebildet ist, um Messergebnisse von den Knoteneinheiten zu erhalten und die Messergebnisse auszuwerten.

10. Messsystem nach Anspruch 8 oder 9, **dadurch gekennzeichnet, dass** zumindest eine adressierbare Knoteneinheit einen Zwischenspeicher umfasst, um Messergebnisse zwischenspeichern zu können.

11. Messsystem nach Anspruch 9 oder 10, **dadurch gekennzeichnet, dass** der zumindest eine Kabelkopfrechner ausgebildet ist, ein Statussignal, basierend auf den empfangenen Messergebnissen, auszugeben.

12. Messsystem nach einem der Ansprüche 8 bis 11, **dadurch gekennzeichnet, dass** die elektrischen Leiter des Sensorkabels verdrillt ausgeführt sind und/oder eine Ummantelung des Sensorkabels eine abschirmende Schicht aufweist.

13. Messsystem nach einem der Ansprüche 8 bis 12, **dadurch gekennzeichnet, dass** das Gehäuse aus einem elektrisch leitenden Material besteht, und an die abschirmende Schicht des Kabels an beiden Seiten angeschlossen ist.

14. Messsystem nach einem der Ansprüche 8 bis 13, **dadurch gekennzeichnet, dass** das Gehäuse die Knoteneinheit rohrförmig umschließt und an beiden Enden staub- und wasserdicht an der angrenzenden Ummantelung befestigt ist.

15. Messsystem nach einem der Ansprüche 8 bis 14, **dadurch gekennzeichnet, dass** jeder Knoteneinheit eine Leuchtdiode zugeordnet ist, die bevorzugt in oder an der jeweiligen Knoteneinheit angeordnet ist.

16. Messsystem nach einem der Ansprüche 8 bis 15, **dadurch gekennzeichnet, dass** das Sensorkabel lösbar an einem Gerüst eines Förderbandes angeordnet ist.

17. Förderband, umfassend mehrere Lager und ein Messsystem nach einem der Ansprüche 8 bis 16, dessen Knoteneinheiten jeweils einem Lager zugeordnet sind.

18. Förderband nach Anspruch 17, **dadurch gekennzeichnet, dass** die Knoteneinheiten jeweils im im Wesentlichen gleichen Abstand zu den entsprechenden Lagern angeordnet sind.

19. Förderband nach Anspruch 17 oder 18, **dadurch gekennzeichnet, dass** die Lager und die zugeordneten Knoteneinheiten an einem gemeinsamen Gerüst angeordnet sind.

20. Förderband nach Anspruch 17, 18 oder 19, **dadurch gekennzeichnet, dass** die Knoteneinheiten von dem jeweiligen Lager beabstandet angeordnet sind, bevorzugt in einer Distanz von 5 bis 20cm, besonders bevorzugt in einer Distanz von 10 bis 15cm.

21. Absperreinrichtung, umfassend mehrere Überwachungssektoren und ein Messsystem nach einem der Ansprüche 8 bis 16, dessen Knoteneinheiten jeweils einem Überwachungssektor zugeordnet sind.

## Claims

1. A method for measuring vibrations on a plurality of spatially spaced-apart measuring points (2) such as bearings of a conveyor belt, wherein at least one acceleration sensor is assigned to each of said measuring points, said acceleration sensors being arranged in addressable node units (5) of a sensor cable (4) and the sensor cable being connected to at least one cable head computer, wherein the node units transmit measurement results to the at least one cable head computer and the at least one cable head computer subsequently evaluates the measurement results of the acceleration sensors, **characterized in that** the sensor cable each forms a connection portion (15) between two adjacent node units and the sensor cable comprises a jacket (8) extending over the connection portions and interrupted in the region of the node units, and the region in which the jacket is interrupted is bridged by a casing (13) surrounding the respective node unit, wherein the acceleration sensor is mechanically coupled directly to the casing, or the acceleration sensor passes through the casing.

2. A method according to claim 1, **characterized in that** the at least one cable head computer sends a request to the at least one acceleration sensor to trigger the transmission of a measurement result.

3. A method according to claim 1 or 2, **characterized in that** the evaluation of the measurement results comprises the comparison of the measured acceleration values, in particular of an amplitude value, to a threshold value.

4. A method according to claim 1, 2 or 3, **characterized in that** the evaluation of the measurement results comprises the counting of exceedances of a threshold value by the measured acceleration values, in particular an amplitude value.

5. A method according to any one of claims 1 to 4, **characterized in that** the measurement results are stored in a buffer memory disposed in the node unit.

6. A method according to any one of claims 1 to 5, **characterized in that** the at least one cable head computer, after having evaluated the measurement results, emits a status signal, for instance, optionally an alarm signal, based on the measurement results.

7. A method according to any one of claims 1 to 6, **characterized in that** the acceleration sensors are each arranged at substantially equal distances to the respective bearings.

8. A measuring system for measuring vibrations on a plurality of spatially spaced-apart measuring points, comprising a plurality of acceleration sensors, wherein at least one acceleration sensors is assignable to each of the measuring points, said acceleration sensors being arranged in addressable node units of a sensor cable capable of being connected to at least one cable head computer, **characterized in that** the sensor cable each forms a connection portion between two adjacent node units and the sensor cable comprises a jacket extending over the connection portions and interrupted in the region of the node units, and the region in which the jacket is interrupted is bridged by a casing surrounding the respective node unit, wherein the acceleration sensor is mechanically coupled directly to the casing, or the acceleration sensor passes through the casing.

9. A measuring system according to claim 8, **characterized in that** the measuring system further comprises a cable head computer configured to receive measurement results from the node units and evaluate said measurement results.

10. A measuring system according to claim 8 or 9, **characterized in that** at least one addressable node unit comprises a buffer memory to enable the intermediate storage of measurement results.

11. A measuring system according to claim 9 or 10, **characterized in that** the at least one cable head computer is configured to emit a status signal based on the received measurement results.

12. A measuring system according to any one of claims 8 to 11, **characterized in that** the electrical conductors of the sensor cable are twisted together, and/or a jacket of the sensor cable comprises a shielding layer.

13. A measuring system according to any one of claims 8 to 12, **characterized in that** the casing is comprised of an electrically conducting material, and the shielding layer of the cable is connected to both sides.

14. A measuring system according to any one of claims 8 to 13, **characterized in that** the casing encompasses the node unit in a tube-like manner and is fastened to the adjoining jacket on both ends in a dust- and water-tight manner.

15. A measuring system according to any one of claims 8 to 14, **characterized in that** a light-emitting diode is assigned to each node unit, said light-emitting diode being preferably arranged in or on the respective node unit.

16. A measuring system according to any one of claims 8 to 15, **characterized in that** the sensor cable is detachably arranged on a frame of a conveyor belt.

17. A conveyor belt comprising several bearings and a measuring system according to any one of claims 8 to 16 whose node units are each assigned to a bearing.

18. A conveyor belt according to claim 17, **characterized in that** the node units are each arranged at substantially equal distances to the respective bearings.

19. A conveyor belt according to claim 17 or 18, **characterized in that** the bearings and the assigned node units are arranged on a common frame.

20. A conveyor belt according to claim 17, 18 or 19, **characterized in that** the node units are arranged so as to be spaced-apart from the respective bearing, preferably at a distance from 5 to 20 cm, particularly preferably at a distance from 10 to 15 cm.

21. A shut-off device comprising several monitoring sectors and a measuring system according to any one of claims 8 to 16 whose node units are each assigned to a monitoring sector.

## Revendications

1. Procédé de mesure de vibration au niveau d'une pluralité de points de mesure (2) espacés dans l'espace, comme par exemple des paliers d'une bande transporteuse, dans lequel au moins un capteur d'accélération est associé à chaque point de mesure, dans lequel les capteurs d'accélération sont agencés dans des unités noeud (5) adressables d'un câble de capteur (4) et le câble de capteur est relié à au moins un processeur en tête de câble, dans lequel les unités noeud envoient des résultats de mesure à l'au moins un processeur en tête de câble et ensuite l'au moins un processeur en tête de câble évalue les résultats de mesure des capteurs d'accélération, **caractérisé en ce que** le câble de capteur forme respectivement une section de liaison (15) entre deux unités noeud adjacentes, et le câble de capteur présente une enveloppe (8), qui s'étend sur les sections de liaison et est interrompue dans la zone des unités noeud, et la zone, dans laquelle l'enveloppe est interrompue, est pontée par un boîtier (13) entourant l'unité noeud respective, dans lequel le capteur d'accélération est couplé mécaniquement directement au boîtier ou le capteur d'accélération fait saillie à travers le boîtier.

2. Procédé selon la revendication 1, **caractérisé en ce que** l'au moins un processeur en tête de câble envoie une demande à au moins un capteur d'accélération pour déclencher la transmission d'un résultat de mesure.

3. Procédé selon la revendication 1 ou 2, **caractérisé en ce que** l'évaluation des résultats de mesure comprend la comparaison des valeurs d'accélération mesurées, en particulier d'une valeur d'amplitude, avec une valeur seuil.

4. Procédé selon la revendication 1, 2 ou 3, **caractérisé en ce que** l'évaluation des résultats de mesure comprend le comptage des dépassements d'une valeur seuil par les valeurs d'accélération mesurées, en particulier une valeur d'amplitude.

5. Procédé selon l'une quelconque des revendications 1 à 4, **caractérisé en ce que** les résultats de mesure sont enregistrés dans une mémoire tampon agencée dans l'unité noeud.

6. Procédé selon l'une quelconque des revendications 1 à 5, **caractérisé en ce que** l'au moins un processeur en tête de câble émet après l'évaluation des résultats de mesure, un signal d'état basé sur les résultats de mesure, par exemple le cas échéant un signal d'alarme.

7. Procédé selon l'une quelconque des revendications 1 à 6, **caractérisé en ce que** les capteurs d'accélération sont agencés respectivement à sensiblement la même distance par rapport aux paliers correspondants,

8. Système de mesure pour la mesure de vibration au niveau d'une pluralité de points de mesure espacés dans l'espace, comprenant une pluralité de capteurs d'accélération, dans lequel au moins un capteur d'accélération peut être associé à chaque point de mesure, dans lequel les capteurs d'accélération sont agencés dans des unités noeud adressables d'un câble de capteur, lequel peut être relié à au moins un processeur en tête de câble, **caractérisé en ce que** le câble de capteur forme respectivement une section de liaison entre deux unités noeud adjacentes, et le câble de capteur présente une enveloppe, qui s'étend sur les sections de liaison et est interrompue dans la zone des unités noeud, et la zone, dans laquelle l'enveloppe est interrompue, est pontée par un boitier entourant l'unité noeud respective, dans lequel le capteur d'accélération est couplé mécaniquement directement au boîtier ou le capteur d'accélération fait saillie à travers le boîtier.

9. Système de mesure selon la revendication 8, **caractérisé en ce que** le système de mesure comprend en outre un processeur en tête de câble, qui est réalisé pour recevoir des résultats de mesure des unités noeud et évaluer les résultats de mesure.

10. Système de mesure selon la revendication 8 ou 9, **caractérisé en ce qu'**au moins une unité noeud adressable comprend une mémoire tampon pour pouvoir mettre les résultats de mesure en mémoire tampon.

11. Système de mesure selon la revendication 9 ou 10, **caractérisé en ce que** l'au moins un processeur en tête de câble est réalisé pour émettre un signal d'état, sur la base des résultats de mesure reçus.

12. Système de mesure selon l'une quelconque des revendications 8 à 11, **caractérisé en ce que** les conducteurs électriques du câble de capteur sont réalisés torsadés et/ou une enveloppe du câble de capteur présente une couche de blindage.

13. Système de mesure selon l'une quelconque des revendications 8 à 12, **caractérisé en ce que** le boîtier est en un matériau électriquement conducteur, et est raccordé des deux côtés à la couche de blindage du câble.

14. Système de mesure selon l'une quelconque des revendications 8 à 13, **caractérisé en ce que** le boîtier entoure l'unité noeud de manière tubulaire et est fixé aux deux extrémités de manière étanche à la poussière et à l'eau au niveau de l'enveloppe adjacente.

15. Système de mesure selon l'une quelconque des revendications 8 à 14, **caractérisé en ce qu'**une diode lumineuse est associée à chaque unité noeud et est agencée de préférence dans ou au niveau de l'unité noeud respective.

16. Système de mesure selon l'une quelconque des revendications 8 à 15, **caractérisé en ce que** le câble de capteur est agencé de manière amovible au niveau d'une armature d'une bande transporteuse.

17. Bande transporteuse, comprenant plusieurs paliers et un système de mesure selon l'une quelconque des revendications 8 à 16, dont les unités noeud sont associées respectivement à un palier.

18. Bande transporteuse selon la revendication 17, **caractérisée en ce que** les unités noeud sont agencées respectivement à sensiblement la même distance par rapport aux paliers correspondants.

19. Bande transporteuse selon la revendication 17 ou 18, **caractérisée en ce que** les paliers et les unités noeud associées sont agencés au niveau d'une armature commune.

20. Bande transporteuse selon la revendication 17, 18 ou 19, **caractérisée en ce que** les unités noeud sont agencées à distance du palier respectif, de préférence à une distance de 5 à 20 cm, de manière particulièrement préférée à une distance de 10 à 15 cm.

21. Dispositif de fermeture, comprenant plusieurs secteurs de surveillance et un système de mesure selon l'une quelconque de revendications 8 à 16, dont les unités noeud sont associées respectivement à un secteur de surveillance.
